# EUROPÄISCHE PATENTANMELDUNG

(11) **EP 4 269 209 A2**
(43) Veröffentlichungstag der Anmeldung: **01.11.2023**
(21) Anmeldenummer: 23170618.5
(22) Anmeldetag: 28.04.2023
(51) Int. Cl.: B62B 3/00, B62B 3/02, B62B 5/00, B62B 5/06, B62B 3/10

(54) **ROLLWAGEN**

(30) Priorität: 29.04.2022 DE 202022102336 U
(71) Anmelder: Qingdao Qingtai Metal Products Co., Ltd., Qingdao City (CN)
(72) Erfinder: Song, Golden, Qingdao (CN)
(74) Vertreter: Weickmann & Weickmann PartmbB

(57) **Zusammenfassung**

Die Erfindung betrifft einen Rollwagen (110), umfassend einen Rahmen (112) und eine Ladefläche (114); wenigstens ein Rad (116) zum Bewegen des Rollwagens (110); einen Griff (118), welcher über eine Griffstange (120) an dem Rahmen (112) befestigt ist; ein abnehmbares Dach (122) um die Ladefläche (114) zu bedecken; und wenigstens ein Befestigungselement (140) zum Befestigen des Dachs (122) an dem Rahmen (112), wobei das Befestigungselement (140) ein erstes Ende (141), welches dazu eingerichtet ist, an dem Rahmen (112) befestigt zu sein, und ein zweites Ende (174) aufweist, welches dazu eingerichtet ist, an dem Dach (122) befestigt zu sein; wobei das Befestigungselement (140) einen Rohrabschnitt (142) umfasst, welcher relativ zu dem Rahmen (112) verschiebbar ist, wobei der Rollwagen (110) ferner einen Faltmechanismus (178) aufweist, mittels welchem der Rollwagen (110) von einer Betriebskonfiguration in eine gefaltete Konfiguration, und umgekehrt, überführbar ist, und wobei der Rollwagen (110) ferner einen Verriegelungsmechanismus (180) aufweist, welcher dazu eingerichtet ist, den Rollwagen (110) automatisch in der gefalteten Konfiguration zu verriegeln, wenn der Rollwagen (110) von der Betriebskonfiguration in die gefaltete Konfiguration überführt wird.

## Beschreibung

Die vorliegende Erfindung betrifft einen Rollwagen, umfassend einen Rahmen, eine Ladefläche, welche an dem Rahmen gehaltert ist, wenigstens ein Rad, welches dazu eingerichtet ist, ein Bewegen des Rollwagens relativ zu einer Bodenfläche zu ermöglichen, und einen Griff, welcher über eine Griffstange an dem Rahmen befestigt ist, sodass der Rollwagen über die Bodenfläche geschoben oder gezogen werden kann.

Rollwägen dieser Art sind aus dem Stand der Technik insbesondere zum Transport von Waren bekannt. Oftmals wird ein Rollwagen von einer Person gezogen, welche sich vor dem Rollwagen befindet. Alternativ kann ein derartiger Rollwagen auch geschoben werden.

Außerdem ist es geläufig, dass ein entsprechender Rollwagen ein Dach umfasst, welches abnehmbar an einem Rahmen des Rollwagens befestigt werden kann. Das Dach dient insbesondere dazu, die Ladefläche selbst sowie die transportierten Waren vor Wind, Regen und Sonneneinstrahlung zu schützen. Zum Befestigen des Dachs an dem Rahmen sind oftmals teleskopierbare Befestigungselemente vorgesehen, welche in einem Ausgangszustand in dem Rahmen des Rollwagens versenkt sind und zum Aufspannen des Dachs aus dem Rahmen herausgezogen werden können.

Da der beschriebene Rollwagen nicht nur auf flachem Terrain, wie beispielsweise asphaltierten Straßen, einsetzbar sein soll, sondern auch in unebenem Gelände, wie beispielsweise am Strand oder auf Spazierpfaden, sind besonders robuste bzw. stabile Rollwägen wünschenswert. Es hat sich nämlich gezeigt, dass die Verwendung von Kunststoffstäben als Befestigungselemente für das Dach unter Umständen zu einer unzureichenden Stabilität der Befestigungselemente führt. So kann es beispielsweise bei starkem Wind oder beim Durchfahren eines Schlaglochs dazu kommen, dass sich ein derartiges Befestigungselement verbiegt oder schlimmstenfalls sogar abbricht. Ein Lösungsansatz hierfür wäre es, die Befestigungselemente bzw. den Rollwagen selbst insgesamt kleiner auszubilden, wodurch jedoch wertvoller Stauraum eingespart werden müsste.

Ferner wirken beim Ziehen des Rollwagens, insbesondere bei Richtungswechseln, in unebenem Gelände erhöhte Kräfte auf einen Griff bzw. eine Griffstange des Rollwagens. Daher sind diese besonders anfällig gegenüber Deformationen, welche ein Navigieren des Rollwagens unter Umständen erschweren. Auch ein Abstellen bzw. Parken des Rollwagens in unebenem Gelände ist oftmals nur aufwendig zu realisieren, insbesondere in abschüssigem Terrain, in welchem sich der Rollwagen unerwünschter Weise verselbstständigen könnte.

Vor diesem Hintergrund ist es eine Aufgabe der Erfindung, einen Rollwagen bereitzustellen, welcher besonders stabil ausgebildet ist und sicher durch jegliches Gelände bewegbar sowie abstellbar ist, ohne dabei auf Stauraum verzichten zu müssen.

Diese Aufgabe wird erfindungsgemäß in einem ersten Aspekt durch einen Rollwagen gelöst, umfassend einen Rahmen; eine Ladefläche, welche an dem Rahmen gehaltert ist; wenigstens ein Rad, welches dazu eingerichtet ist, ein Bewegen des Rollwagens relativ zu einer Bodenfläche zu ermöglichen; einen Griff, welcher über eine Griffstange an dem Rahmen befestigt ist; ein Dach, welches dazu eingerichtet ist, an dem Rahmen abnehmbar befestigt zu sein, um die Ladefläche zu bedecken; und wenigstens ein Befestigungselement zum Befestigen des Dachs an dem Rahmen, wobei das Befestigungselement ein erstes Ende, welches dazu eingerichtet ist, an dem Rahmen befestigt zu sein, und ein zweites Ende aufweist, welches dazu eingerichtet ist, an dem Dach befestigt zu sein; wobei das Befestigungselement einen Rohrabschnitt umfasst, welcher relativ zu dem Rahmen verschiebbar ist, wobei der Rollwagen ferner einen Faltmechanismus aufweist, mittels welchem der Rollwagen von einer Betriebskonfiguration in eine gefaltete Konfiguration, und umgekehrt, überführbar ist, und wobei der Rollwagen ferner einen Verriegelungsmechanismus aufweist, welcher dazu eingerichtet ist, den Rollwagen automatisch in der gefalteten Konfiguration zu verriegeln, wenn der Rollwagen von der Betriebskonfiguration in die gefaltete Konfiguration überführt wird.

Bei der Betriebskonfiguration handelt es sich um die Konfiguration, in welcher der Rollwagen einsatzfähig ist, d.h. für die eingangs beschriebenen Verwendungszwecke einsetzbar ist. Die gefaltete Konfiguration hingegen ist eine Konfiguration, in welcher der Rollwagen zusammengefaltet bzw. zusammengeklappt ist, insbesondere um platzsparend verstaut werden zu können. So ist es beispielsweise bevorzugt, den Rollwagen in der gefalteten Konfiguration in einem Kofferraum eines Pkws zu transportieren oder ihn in einem Abstellraum zu lagern.

Der Faltmechanismus, welcher reversibel ausgebildet ist, sodass der Rollwagen beliebig von der Betriebsposition in die gefaltete Konfiguration, und umgekehrt, überführt werden kann, ermöglicht vorzugsweise ein symmetrisches Zusammenfalten des Rollwagens. Aus diesem Grund kann der Faltmechanismus insbesondere mittig in Bezug auf die Haupterstreckungsrichtung des Rollwagens ausgebildet sein, sodass insbesondere der Rahmen des Rollwagens ausgehend von der Mitte des Rollwagens beidseitig zu gleichen Teilen gefaltet wird.

Gemäß einem wichtigen Merkmal der vorliegenden Erfindung umfasst der Rollwagen einen Verriegelungsmechanismus, welcher dazu dient, den Rollwagen in der gefalteten Konfiguration zu verriegeln. Durch einen derartigen Verriegelungsmechanismus kann sichergestellt werden, dass der Rollwagen in der gefalteten Konfiguration verbleibt und sich nicht auf unerwünschte Weise entfaltet. Insbesondere bei der Handhabung des gefalteten Rollwagens kann sich ein Benutzer des Rollwagens daher rein auf das Verstauen des Rollwagens konzentrieren. Besonders vorteilhaft an dem Verriegelungsmechanismus der vorliegenden Erfindung ist, dass der Rollwagen beim Zusammenfalten, also beim Überführen von der Betriebskonfiguration in die gefaltete Konfiguration, automatisch, d.h. ohne zusätzliches Zutun durch den Benutzer verriegelt. Dementsprechend kann der Benutzer den Rollwagen beidhändig zusammenfalten, ohne dabei auf ein Betätigen bzw. Auslösen des Verriegelungsmechanismus achten zu müssen. Dies vereinfacht die Handhabung des Rollwagens für den Benutzer.

In einer optionalen Ausführungsform des erfindungsgemäßen Rollwagens kann der Rahmen eine Mehrzahl von Gelenkelementen aufweisen, wobei jeweils ein Gelenkelement zwei erste Rahmenelemente des Rahmens derart miteinander verbindet, dass die Rahmenelemente um eine Faltachse gefaltet werden können, welche orthogonal zu der Haupterstreckungsrichtung des Rollwagens verläuft, und wobei die Gelenkelemente und die Rahmenelemente den Faltmechanismus definieren. Ein Gelenkelement kann dabei beispielsweise als ein Scharnier ausgebildet sein, an dessen gegenüberliegenden Enden jeweils ein Rahmenelement angeordnet ist. Entsprechende Rahmenelemente sind vorzugsweise parallel zu der Haupterstreckungsrichtung des Rollwagens ausgebildet und erstrecken sich somit entlang der beiden Längsseiten des Rahmens des Rollwagens. Die Faltachse verläuft orthogonal zu den Rahmenelementen.

Zum Überführen des Rollwagens in die gefaltete Konfiguration kann beispielsweise eine Lasche oder ein Griff an der Ladefläche oder dem Rahmen des Rollwagens vorgesehen sein, mittels welcher der Benutzer die Rahmenelemente um die Faltachse falten kann. Dazu kann insbesondere ein Gestänge vorgesehen sein, welches entlang der Faltachse verläuft und in Bezug auf die beiden Längsseiten des Rahmens beidseitig mit den Gelenkelementen verbunden ist. Indem das Gestänge mit der Lasche oder dem Griff verbunden wird, kann der Benutzer auf einfache Art und Weise eine Kraft auf das Gestänge ausüben und dadurch den Faltmechanismus betätigen.

In einer weiteren Ausführungsform des erfindungsgemäßen Rollwagens kann der Verriegelungsmechanismus ein erstes Verriegelungselement und ein zweites Verriegelungselement umfassen, wobei die beiden Verriegelungselemente komplementär zueinander ausgebildet sein können. Dazu ist vorzugsweise jedes Verriegelungselement an einem länglichen Rahmenelement angeordnet, wobei die entsprechenden Rahmenelemente jeweils an einem der beiden gegenüberliegenden Enden eines Gelenkelements angeordnet sind. Die Verriegelungselemente sind steif ausgebildet und verändern ihre Position relativ zu dem Rahmenelement, an welchem sie angeordnet sind, während des Zusammenfaltens des Rollwagens nicht. Um den Rollwagen mittels der beiden Verriegelungselemente in der gefalteten Konfiguration zu verriegeln, kann es ausreichen, die beiden Verriegelungselemente an lediglich einer Längsseite des Rahmens bereitzustellen. Alternativ können jedoch auch mehrere Verriegelungselemente und entsprechende Rahmenelemente sowie Gelenkelemente an einer Längsseite oder beiden Längsseiten des Rahmens vorgesehen sein. Die beiden Verriegelungselemente können beispielsweise aus Kunststoff hergestellt sein, um das Gewicht des Rollwagens nicht unnötig zu erhöhen. Es ist allerdings ebenso möglich, die Verriegelungselemente aus einem anderen Material, beispielsweise Metall, herzustellen.

Optional können die beiden Verriegelungselemente derart an dem Rahmen angeordnet sein, dass sie beim Überführen des Rollwagens von der Betriebskonfiguration in die gefaltete Konfiguration miteinander in Eingriff treten, um den Rollwagen in der gefalteten Konfiguration zu verriegeln. Wie bereits erwähnt, können die beiden Verriegelungselemente an jeweils einem Rahmenelement an einer Längsseite des Rahmens bereitgestellt sein. Beim Zusammenfalten des Rollwagens können die beiden entsprechenden Rahmenelemente um die Faltachse schwenken und sich dabei einander annähern, sodass sich die beiden Verriegelungselemente aufeinander zubewegen und miteinander in Eingriff treten. Wie bereits erwähnt, erfolgt dieser Eingriff insbesondere automatisch, also rein durch das Zusammenfalten des Rollwagens, ohne dass der Benutzer den Verriegelungsmechanismus auf irgendeine Art und Weise betätigen muss.

Ferner kann das erste Verriegelungselement einen Schlitz und eine Aussparung umfassen, wobei die Aussparung orthogonal zu dem Schlitz ausgebildet ist, wobei das zweite Verriegelungselement einen Fortsatz und einen verlagerbaren Abschnitt umfasst, welcher an dem Fortsatz ausgebildet ist, und wobei der Fortsatz des zweiten Verriegelungselements dazu eingerichtet ist, beim Überführen des Rollwagens in die gefaltete Konfiguration in den Schlitz des ersten Verriegelungselements einführbar zu sein, sodass der verlagerbare Abschnitt des zweiten Verriegelungselements mit der Aussparung des ersten Verriegelungselements in Eingriff tritt. Der Schlitz des ersten Verriegelungselements und der Fortsatz des zweiten Verriegelungselements können insbesondere parallel zu den länglichen Rahmenelementen ausgerichtet sein, sodass der Fortsatz beim Zusammenfalten des Rollwagens ohne Weiteres in den Schlitz gleiten kann, um den Eingriff zwischen den beiden Verriegelungselementen herzustellen. Die Abmessungen des Schlitzes und des Fortsatzes sowie der Aussparung und des verlagerbaren Abschnitts sind vorzugsweise jeweils komplementär zueinander ausgebildet.

In einer optionalen Ausführungsform des erfindungsgemäßen Rollwagens kann der verlagerbare Abschnitt des zweiten Verriegelungselements in Bezug auf den Fortsatz eine Neigung aufweisen, sodass der verlagerbare Abschnitt wenigstens abschnittsweise über den Fortsatz hervorsteht. Die Neigung des verlagerbaren Abschnitts kann dabei insbesondere derart ausgebildet sein, dass sie von einem vorderen Ende des zweiten Verriegelungselements ausgehend, an welchem der verlagerbare Abschnitt im Wesentlichen eben zu dem Fortsatz ausgebildet ist, stetig ansteigt. Bei dem vorderen Ende des zweiten Verriegelungselements handelt es sich in diesem Zusammenhang um einen Abschnitt des Fortsatzes, welcher im Zuge des Eingriffs zwischen dem ersten und dem zweiten Verriegelungselement in den Schlitz des ersten Verriegelungselements eindringt. Folglich stößt der verlagerbare Abschnitt aufgrund dessen Neigung an der seitlichen Begrenzung des Schlitzes an und wird daraufhin in Richtung des Inneren des Fortsatzes verlagert, sodass das Zusammenfalten des Rollwagens eine Verlagerung bzw. Betätigung des verlagerbaren Abschnitts erzeugt. Die seitliche Begrenzung des Schlitzes bleibt kontinuierlich mit dem geneigten verlagerbaren Abschnitt in Kontakt, bis dieser vollständig in der Aussparung des ersten Verriegelungselements aufgenommen ist und darin arretiert. Dieser Vorgang stellt den Eingriff zwischen dem ersten und dem zweiten Verriegelungselement und somit die Verrieglung des Rollwagens in der gefalteten Konfiguration dar.

In einer weiteren Ausführungsform des erfindungsgemäßen Rollwagens kann im Inneren des Fortsatzes des zweiten Verriegelungselements ein Rückstellelement ausgebildet sein, welches dazu eingerichtet ist, eine Rückstellkraft auf den verlagerbaren Abschnitt auszuüben, um den verlagerbaren Abschnitt als Reaktion auf eine Betätigung des verlagerbaren Abschnitts in eine Ausgangsposition zurückzuführen. Das Rückstellelement, beispielsweise eine Rückstellfeder, kann auf den verlagerbaren Abschnitt eine Kraft ausüben, welche insbesondere entgegen der zuvor beschriebenen Betätigung bzw. Verlagerung des verlagerbaren Abschnitts durch die seitliche Begrenzung des Schlitzes wirkt. Folglich bewirkt das Rückstellelement, dass der verlagerbare Abschnitt in seine Ausgangsposition verlagert wird, nachdem der verlagerbare Abschnitt vollständig in der Aussparung des ersten Verriegelungselements aufgenommen ist, d.h. wenn die seitliche Begrenzung des Schlitzes den verlagerbaren Abschnitt nicht länger kontaktiert. Unter der Ausgangsposition des verlagerbaren Abschnitts ist in diesem Zusammenhang die Position des verlagerbaren Abschnitts zu verstehen, welche er in der Betriebskonfiguration des Rollwagens einnimmt.

Ferner kann der Eingriff des ersten und des zweiten Verriegelungselements durch Betätigen des verlagerbaren Abschnitts des zweiten Verriegelungselements lösbar sein, sodass der Rollwagen von der gefalteten Konfiguration in die Betriebskonfiguration überführt werden kann. Insbesondere kann zum Lösen des Eingriffs der verlagerbare Abschnitt aus der Aussparung des ersten Verriegelungselements verlagert werden, indem der Benutzer beispielsweise mit einem Finger den verlagerbaren Abschnitt entgegen die Rückstellkraft des Rückstellelements in Richtung des Inneren des Fortsatzes drückt und zeitgleich den zusammengefalteten Rahmen des Rollwagens entfaltet. Dadurch kann der Fortsatz des zweiten Verriegelungselements aus dem Schlitz des ersten Verriegelungselements verlagert werden und der Rollwagen in die Betriebskonfiguration überführt werden. Der Verriegelungsmechanismus bietet dem Benutzer des Rollwagens somit eine einfache Möglichkeit, den Rollwagen von der gefalteten Konfiguration zurück in die Betriebskonfiguration zu überführen. Des Weiteren umfasst das wenigstens eine Befestigungselement zum Befestigen des Dachs an dem Rahmen optional einen oder mehrere Rohrabschnitte, welche in Bezug auf den Rahmen verlagerbar montiert sind. Durch die Verwendung eines Rohrabschnitts wird eine sichere Verbindung zwischen dem Rahmen und dem Dach bereitgestellt. Die rohrförmige Form des Rohrabschnitts gewährleistet dessen Strukturstabilität, welche gleichzeitig auch die Stabilität des Dachs erhöht. Außerdem ist der Rohrabschnitt in Bezug auf den Rahmen verlagerbar montiert, wodurch auf eine einfache Art und Weise unterschiedliche Konfigurationen des Rollwagens erreicht werden können. So kann beispielsweise durch Verschieben des Rohrabschnitts die Höhe des Dachs angepasst werden. Ebenso kann der Rohrabschnitt in eine Position überführt werden, in welche er in dem Rahmen verstaut ist, insbesondere wenn das Dach entfernt wurde. Dementsprechend ist der Rohrabschnitt auch dann über das Befestigungselement mit dem Rahmen verbunden, wenn kein Dach an dem Rollwagen angebracht ist. Ferner ist es vorgesehen, dass der Rohrabschnitt in der verstauten Position größtenteils oder sogar vollständig in dem Rahmen integriert ist.

Es hat sich gezeigt, dass die Stabilität des an dem Rohrabschnitt befestigten Dachs signifikant von der Stabilität des Rohrabschnitts abhängig ist. So wirkt sich insbesondere ein Rohrabschnitt mit erhöhtem Durchmesser positiv auf dessen Stabilität und dadurch auch auf das Dach aus. Ferner besteht bei einem besonders dünnen Rohrabschnitt die Gefahr, dass sich dieser durch Erschütterungen oder starken Wind verbiegt oder sogar abbricht. Bei starkem Regen kann sich Wasser auf dem Dach des Rollwagens ansammeln und dadurch eine erhebliche Gewichtszunahme des Dachs erzeugen. Um zu vermeiden, dass das Dach in solch einem Fall einbricht, sollten sowohl das Dach als auch der Rohrabschnitt eine hohe Stabilität aufweisen. Daher weist der Rohrabschnitt optional einen Durchmesser auf, welcher größer als 1 cm ist, vorzugsweise größer als 2 cm ist. Es ist jedoch ebenso wünschenswert, dass der Rohrabschnitt handlich sowie einfach zu bedienen ist. Außerdem muss der Rohrabschnitt zusammen mit dem Befestigungselement mit dem Rahmen kompatibel sein und ferner das Gewicht des Rollwagens nicht zu stark erhöhen. Aus diesen Gründen ist ein Rohrabschnitt mit besonders großem Durchmesser unter Umständen kontraproduktiv. Der Rohrabschnitt der vorliegenden Erfindung weist daher besonders bevorzugt einen Durchmesser zwischen 2 cm und 4 cm auf.

In einer bevorzugten Ausführungsform des erfindungsgemäßen Rollwagens kann das Befestigungselement eine Arretiereinheit umfassen, welche dazu eingerichtet ist, den Rohrabschnitt in einer Arretierposition zu arretieren, wobei der Rohrabschnitt entlang seiner Haupterstreckungsrichtung wenigstens ein zu der Arretiereinheit komplementäres Arretierelement umfasst. Vorzugsweise kann der Rohrabschnitt durch das Arretierelement relativ zu dem Rahmen in wenigstens zwei Arretierpositionen arretiert werden, wodurch die Höhe des an dem Rohrabschnitt befestigten Dachs mittels der Arretiereinheit in Verbindung mit den Arretierpositionen eingestellt werden kann. Beispielsweise kann es wünschenswert sein, dass Dach auf eine niedrige Arretierposition einzustellen, wenn sich lediglich flache Gegenstände in dem Rollwagen befinden. Andererseits kann das Dach auf eine höhere Arretierposition eingestellt werden, wenn größere Gegenstände in dem Rollwagen transportiert werden.

Ferner kann eine Basis-Arretierposition vorgesehen sein, in welcher der Rohrabschnitt vollständig oder größtenteils in dem Rahmen des Rollwagens verstaut ist. Es kann durchaus zweckmäßig sein, dass das Dach auch in einem Zustand an dem Rollwagen befestigbar ist, in welchem sich der Rohrabschnitt in der Basis-Arretierposition befindet. Insbesondere durch Betätigen der Arretiereinheit des Befestigungselements kann der Rohrabschnitt in seiner jeweiliger Arretierposition freigegeben werden und daraufhin in eine andere Arretierposition verlagert werden. Das Arretierelement des Rohrabschnitts ist beispielsweise in Form von mehreren Einkerbungen des Rohrabschnitts ausgebildet, wobei jede Einkerbung eine Arretierposition darstellt.

In einer optionalen Ausführungsform des erfindungsgemäßen Rollwagens kann der Rohrabschnitt aus einem Metall hergestellt sein, vorzugsweise aus Aluminium. Dadurch kann die Stabilität und die Festigkeit des Befestigungselements erhöht werden. Insofern Aluminium zur Herstellung des Rohrabschnitts verwendet wird, kann eine ausreichend hohe Stabilität des Befestigungselements erzielt werden, ohne dabei das Gewicht des Rollwagens signifikant zu erhöhen, beispielsweise im Vergleich zu einem aus Kunststoff hergestellten Rohrabschnitt. Zur Herstellung des Rohrabschnitts eignet sich insbesondere auch Edelstahl. Ein metallischer Rohrabschnitt eignet sich ferner insbesondere dazu, auch bei starkem Wind nicht zu verbiegen oder abzubrechen, wodurch auch die Stabilität des Dachs erhöht wird. Des Weiteren kann durch die Verwendung eines Metalls mit hohem Elastizitätsmodul die Widerstandsfähigkeit des Befestigungselements gegenüber Erschütterungen verbessert werden, wobei entsprechende Erschütterungen insbesondere dann auftreten können, wenn der Rollwagen über unebenes Gelände oder beispielsweise durch Schlaglöcher bewegt wird.

In einem zweiten Aspekt wird die Aufgabe durch einen Rollwagen gelöst, umfassend einen Rahmen; eine Ladefläche, welche an dem Rahmen gehaltert ist; wenigstens ein Rad, welches dazu eingerichtet ist, ein Bewegen des Rollwagens relativ zu einer Bodenfläche zu ermöglichen; einen Griff, welcher über eine Griffstange an dem Rahmen befestigt ist; ein Dach, welches dazu eingerichtet ist, an dem Rahmen abnehmbar befestigt zu sein, um die Ladefläche zu bedecken; und wenigstens ein Befestigungselement zum Befestigen des Dachs an dem Rahmen, wobei das Befestigungselement ein erstes Ende, welches dazu eingerichtet ist, an dem Rahmen befestigt zu sein, und ein zweites Ende aufweist, welches dazu eingerichtet ist, an dem Dach befestigt zu sein; wobei das Befestigungselement einen Rohrabschnitt umfasst, welcher relativ zu dem Rahmen verschiebbar ist, wobei an der Griffstange ein Gestänge angeordnet ist, welche schwenkbar an dem Rahmen gelagert ist und dazu eingerichtet ist, eine lateral auf die Griffstange wirkende Kraft auf den Rahmen abzuleiten.

Insbesondere bei der Verwendung des Griffs zum Ziehen bzw. Schieben des Rollwagens über unebenes Terrain ist die Griffstange einer hohen Belastung ausgesetzt. Vor allem während der Kurvenfahrt wirken dabei laterale Kräfte auf die Griffstange, welche zu einem Verbiegen oder im schlimmsten Fall sogar zu einem Abbrechen der Griffstange führen können. Aus diesem Grund wird die Griffstange des Rollwagens gemäß dem zweiten Aspekt der vorliegenden Erfindung durch ein Gestänge stabilisiert. Das Gestänge steht mit der Griffstange in Eingriff, beispielsweise mittig in Bezug auf die Haupterstreckungsrichtung der Griffstange. Insofern eine teleskopierbare Griffstange verwendet wird, so kann diese gleitbar bzw. teleskopierbar mit dem Gestänge in Eingriff stehen. Das Gestänge erstreckt sich, ausgehend von der Griffstange, insbesondere zu dem Rahmen des Rollwagens und kann mit diesem schwenkbar verbunden sein. Folglich können lateral auf die Griffstange wirkende Kräfte über das Gestänge auf den Rahmen abgeleitet werden. Ferner kann das Gestänge zusammen mit der Griffstange um eine gemeinsame Schwenkachse, welche beispielsweise parallel zu einer Stirnseite des Rollwagens verläuft, geschwenkt werden.

In einer bevorzugten Ausführungsform des erfindungsgemäßen Rollwagens kann das Gestänge einen ersten Abschnitt und einen zweiten Abschnitt aufweisen, wobei sich der erste Abschnitt und der zweite Abschnitt von der Griffstange in entgegengesetzter Richtung zu dem Rahmen erstrecken. In anderen Worten kann das Gestänge zweiteilig ausgebildet sein und sich beidseitig von der Griffstange in Richtung des Rahmens erstrecken, wobei die beiden Teile bzw. der erste und der zweite Abschnitt des Gestänges durch ein Verbindungselement miteinander an der Griffstange verbunden sein können. Diese Anordnung hat den Vorteil, dass lateral auf die Griffstange wirkende Kräfte über das Gestänge beidseitig, d.h. entweder über den ersten Abschnitt oder über den zweiten Abschnitt des Gestänges, auf den Rahmen übertragen werden können.

In einer optionalen Ausführungsform des erfindungsgemäßen Rollwagens kann das Gestänge einen Durchmesser aufweisen, welcher größer als 1 cm ist, vorzugweise größer als 1.5 cm ist, und besonders bevorzugt zwischen 1.5 cm und 3 cm liegt. Ein Durchmesser von 1 cm oder größer dient insbesondere dazu, die die Festigkeit des Gestänges und somit dessen Widerstandsfähigkeit gegenüber Erschütterungen und Vibrationen zu erhöhen. Andererseits kann es vorteilhaft sein, den Durchmesser des Gestänges nicht zu groß auszubilden, vorzugsweise nicht größer als 3 cm, sodass die Schwenkbarkeit der Griffstange und des Gestänges selbst nicht beeinträchtigt wird.

In einem dritten Aspekt wird die Aufgabe durch einen Rollwagen gelöst, umfassend einen Rahmen; eine Ladefläche, welche an dem Rahmen gehaltert ist; wenigstens ein Rad, welches dazu eingerichtet ist, ein Bewegen des Rollwagens relativ zu einer Bodenfläche zu ermöglichen; einen Griff, welcher über eine Griffstange an dem Rahmen befestigt ist; ein Dach, welches dazu eingerichtet ist, an dem Rahmen abnehmbar befestigt zu sein, um die Ladefläche zu bedecken; und wenigstens ein Befestigungselement zum Befestigen des Dachs an dem Rahmen, wobei das Befestigungselement ein erstes Ende, welches dazu eingerichtet ist, an dem Rahmen befestigt zu sein, und ein zweites Ende aufweist, welches dazu eingerichtet ist, an dem Dach befestigt zu sein; wobei das Befestigungselement einen Rohrabschnitt umfasst, welcher relativ zu dem Rahmen verschiebbar ist, wobei an dem Rahmen wenigstens eine Tasche angeordnet ist, welche über wenigstens eine Schwenkeinheit schwenkbar an dem Rahmen gelagert ist und schwenkbar zwischen einer Betriebsposition, in welcher ein Aufnahmebereich der Tasche vollständig freigegeben ist, und einer verstauten Position ist, in welcher der Aufnahmebereich lediglich teilweise freigegeben ist.

Die Tasche dient insbesondere als zusätzlicher Stauraum für Gegenstände, welche beispielsweise getrennt von sich auf der Ladefläche befindlichen Objekten transportiert werden sollen. Die Tasche kann entweder in der Betriebsposition oder in der verstauten Position bereitgestellt sein, wobei ein Benutzer des Rollwagens die Tasche jederzeit von der Betriebsposition in die verstaute Position und umgekehrt überführen kann. Insbesondere kann es vorgesehen sein, dass sowohl in der Betriebsposition als auch in der verstauten Position Gegenstände in der Tasche gelagert werden können, wobei die Tasche in der Betriebsposition vorzugsweise einen größeren Stauraum aufweist. Dazu kann der Aufnahmebereich der Tasche in beiden Positionen zugänglich sein, sodass Gegenstände über den Aufnahmebereich in der Tasche abgelegt bzw. aus der Tasche entnommen werden können. Optional kann hierbei auch eine Abdeckung an der Tasche anbringbar sein, mittels welcher der Aufnahmebereich verschlossen werden kann, um beispielsweise den Inhalt der Tasche vor Regen zu schützen.

In einer bevorzugten Ausführungsform des erfindungsgemäßen Rollwagens kann die Tasche an einer von der Ladefläche abweisenden Seite des Rahmens angeordnet sein. Mit anderen Worten kann die Tasche derart an dem Rahmen bereitgestellt sein, dass sie für den Benutzer des Rollwagens von außen gut erreichbar ist. Dies hat insbesondere den Vorteil, dass die Schwenkbarkeit der Tasche nicht durch Gegenstände im Inneren des Rollwagens beeinträchtigt wird. Alternativ kann die Tasche jedoch auch an einer Rahmeninnenseite des Rollwagens angeordnet sein.

Die Betriebsposition und die verstaute Position der Tasche können optional in einem Winkel von etwa 90° zueinander ausgebildet sein. Dabei kann insbesondere vorgesehen sein, dass der Aufnahmebereich der Tasche in der Betriebsposition im Wesentlichen parallel zu einer axialen Haupterstreckungsrichtung des Rollwagens ausgebildet ist. Dadurch kann gewährleistet werden, dass der Benutzer Gegenstände möglichst einfach in der Tasche ablegen bzw. aus der Tasche entnehmen kann. In der verstauten Position liegt das gesamte Volumen der Tasche vorzugsweise möglichst eng an dem Rahmen des Rollwagens an, sodass der Gesamtumfang des Rollwagens durch eine an einer Rahmenaußenseite des Rollwagens angebrachten Tasche nicht oder nur geringfügig vergrößert wird.

In einer optionalen Ausführungsform des erfindungsgemäßen Rollwagens kann die Schwenkeinheit einen Schwenkmechanismus umfassen, welcher dazu eingerichtet ist, ein Überführen der Tasche von der Betriebsposition in die verstaute Position und umgekehrt durch manuelle Betätigung der Tasche zu ermöglichen. Der Schwenkmechanismus umfasst vorzugsweise wenigstens zwei Arretierpositionen, wobei eine erste Arretierposition für die Betriebsposition und eine zweite Arretierposition für die verstaute Position vorgesehen sein kann. Befindet sich die Tasche nun beispielsweise in der verstauten Position, so kann der Benutzer die Tasche durch Betätigen des Schwenkmechanismus von der ersten Arretierposition in die zweite Arretierposition und somit in die Betriebsposition überführen, wobei das Überführen im Wesentlich aus einem Schwenken der Tasche um eine Schwenkachse besteht. Alternativ kann hierbei auch nur eine Arretierposition ausgebildet sein, welche die Betriebsposition der Tasche definiert. In diesem Fall ist die Tasche in der verstauten Position nicht arretiert und kann dementsprechend ohne Betätigung des Schwenkmechanismus verlagert werden.

Des Weiteren umfasst der Rollwagen optional ferner wenigstens ein Betätigungselement, welches eine Freigabestellung und eine Sperrstellung aufweist und derart mit dem Rad gekoppelt ist, dass das Rad in der Freigabestellung um eine Rotationsachse rotierbar ist und dass die Rotation des Rads in der Sperrstellung gesperrt ist.

Das Betätigungselement dient insbesondere dazu, das Rad des Rollwagens zu sperren bzw. blockieren, sodass dieser auch in unebenem Gelände abgestellt werden kann. Daraus ergibt sich, dass der Benutzer des Rollwagens das Betätigungselement im Allgemeinen zum Abstellen bzw. Parken des Rollwagens von der Freigabestellung in die Sperrstellung überführt. Alternativ oder zusätzlich kann wenigstens ein Betätigungselement auch als Bremse ausgebildet sein, welche vorzugsweise in der Nähe des Griffs bzw. der Griffstange angeordnet ist und es dem Benutzer ermöglicht, den Rollwagen während der Fahrt abzubremsen.

Des Weiteren kann das Betätigungselement an einer Radaufhängung, an dem Rad oder an dem Rahmen ausgebildet sein. Je nach Bauart des Rollwagens kann eine der genannten Konfigurationen vorteilhaft sein. Befindet sich beispielsweise das Rad relativ zentral an einer Unterseite des Rollwagens, so wäre ein an dem Rad oder an der Radaufhängung bereitgestelltes Betätigungselement nur schwer für den Benutzer zu erreichen. In solch einem Fall wäre die Anbringung des Betätigungselements an dem Rahmen des Rollwagens inklusive Kopplung mit dem entsprechenden Rad bevorzugt.

In einer bevorzugten Ausführungsform des erfindungsgemäßen Rollwagens kann das Betätigungselement durch manuelle Betätigung von der Freigabestellung in die Sperrstellung und umgekehrt überführbar sein. Um das Betätigen des Betätigungselements für den Benutzer zu erleichtern, ist dieses vorzugsweise mit einer Trittfläche ausgebildet, welche der Benutzer bequem mit dem Fuß erreichen kann. Ferner kann die Trittfläche zwischen zwei Stellungen verlagerbar sein, wobei eine erste Stellung der Freigabestellung und eine zweite Stellung der Sperrstellung entspricht. Insofern das Betätigungselement auf Griffhöhe des Benutzers an dem Rollwagen angebracht ist, so kann dieses anstelle der Trittfläche auch einen Griff umfassen.

Der Rollwagen kann insbesondere eine Mehrzahl von Rädern, vorzugsweise vier Räder, und eine Mehrzahl von Betätigungselementen umfassen, wobei jedes Rad mit jeweils einem Betätigungselement gekoppelt ist. Insofern wenigstens zwei Räder ausgebildet sind, sind diese vorzugweise an einer Vorderachse bzw. an einer Hinterachse des Rollwagens angeordnet, sodass der Benutzer wahlweise eine der beiden Achsen über die jeweiligen Betätigungselemente sperren bzw. freigeben kann. Optional kann jedes Betätigungselement jeweils einzeln oder über einen Betätigungsmechanismus gemeinsam betätigbar sein. Folglich kann der Benutzer des Rollwagens auch jedes Rad einzeln sperren bzw. freigeben. Alternativ kann ein zentrales Betätigungselement vorgesehen sein, welches mit sämtlichen Rädern des Rollwagens gekoppelt ist.

Es sei an dieser Stelle explizit darauf hingewiesen, dass sämtliche in Bezug auf den ersten, zweiten und dritten Aspekt beschriebene Merkmale, Effekte und Vorteile auch auf die jeweiligen anderen Aspekte anwendbar und kombinierbar sein können.

Die vorliegende Erfindung wird im Folgenden anhand von Ausführungsbeispielen mit Bezug auf die begleitenden Zeichnungen in größerem Detail beschrieben werden. Es stellt dar:
- Figur 1: eine perspektivische Ansicht eines Rollwagens gemäß einem ersten Ausführungsbeispiel mit einem abgesenkten Dach;
- Figur 2: eine perspektivische Ansicht eines Rollwagens gemäß einem zweiten Ausführungsbeispiel mit einem erhöhten Dach;
- Figur 3: eine Frontalansicht eines Rollwagens gemäß dem zweiten Ausführungsbeispiel;
- Figur 4: eine perspektivische Ansicht eines Rollwagens gemäß einem dritten Ausführungsbeispiel mit einem erhöhten Dach;
- Figur 5: eine perspektivische Ansicht eines Teilabschnitts des Rollwagens gemäß dem dritten Ausführungsbeispiel;
- Figur 6: eine perspektivische Ansicht eines Rollwagens gemäß dem zweiten Ausführungsbeispiel ohne Dach;
- Figur 7: eine Detailansicht eines Befestigungselements mit Rohrabschnitt;
- Figur 8a: eine Detailansicht einer Längsseite des Rahmens mit einem ersten und einem zweiten Verriegelungselement in einer Betriebskonfiguration;
- Figur 8b: eine Draufsicht auf die beiden Verriegelungselemente in einem nicht verriegelten Zustand;
- Figur 9a: eine Detailansicht einer Längsseite des Rahmens mit dem ersten und zweiten Verriegelungselement in einer gefalteten Konfiguration; und
- Figur 9b: eine Draufsicht auf die beiden Verriegelungselemente in einem verriegelten Zustand.

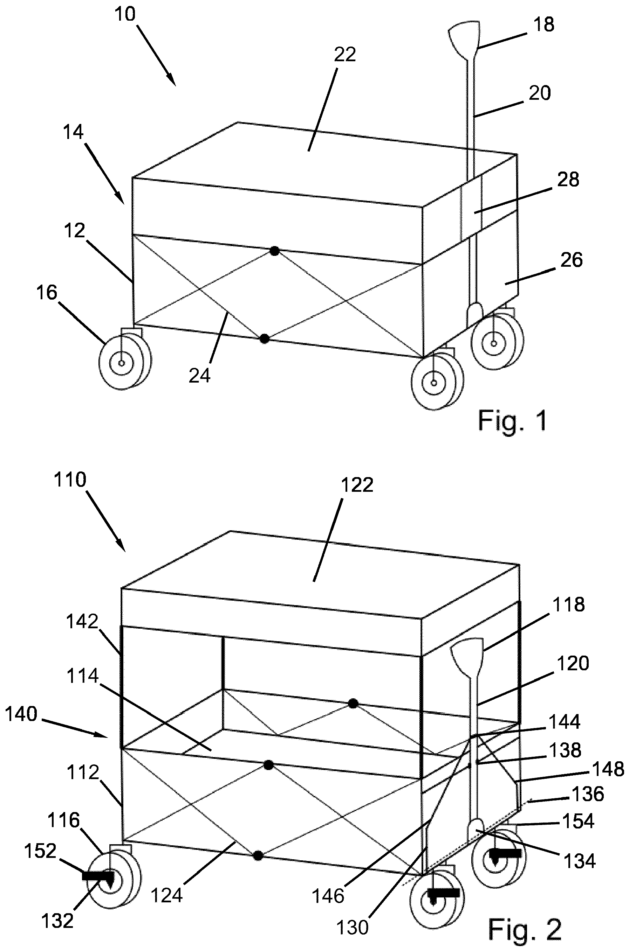

In Figur 1 ist ein erfindungsgemäßer Rollwagen gemäß einem ersten Ausführungsbeispiel mit dem Bezugszeichen 10 bezeichnet. Der Rollwagen 10 umfasst einen Rahmen 12, welcher in seinem Inneren eine Ladefläche 14 haltert, und vier Räder 16, von denen aufgrund der perspektivischen Ansicht in Figur 1 lediglich drei Räder 16 sichtbar sind. Die Räder 16 sind insbesondere dazu eingerichtet, ein Bewegen des Rollwagens 10 auf bzw. über eine Bodenfläche zu ermöglichen. Ferner umfasst der Rollwagen 10 einen Griff 18, welcher über eine Griffstange 20 mit dem Rahmen 12 verbunden ist, und ein Dach 22, welches abnehmbar an dem Rahmen 12 angebracht ist und insbesondere die Ladefläche 14 bedeckt. Da das Dach 22 hier in einer abgesenkten Position ausgebildet ist, wird die Ladefläche 14 in Figur 1 vollständig von dem Dach 22 bedeckt und ist daher lediglich angedeutet. Der Rahmen 12 und die Ladefläche 14 können beispielsweise dazu eingerichtet sein, eine Nutzlast von bis zu 60 kg aufzunehmen, wobei es sich bei der Nutzlast um zu transportierende Waren handeln kann. Es ist jedoch ebenso denkbar, dass der Rahmen 12 und die Ladefläche 12 derart ausgebildet sind, dass eine höhere Nutzlast transportiert werden kann.

Der Rahmen 12 wird insbesondere durch eine Mehrzahl länglicher Rahmenelemente 24 gebildet, welche dazu geeignet sind, miteinander verbunden zu werden, um die im Wesentlichen rechteckige Ladefläche 14 zu bilden. Die Ladefläche 14 und das Dach 22 sind vorzugsweise aus einem leichten sowie flexiblen Material hergestellt, beispielsweise aus einem Textilmaterial. Ferner umfasst die Ladefläche 14 Seitenwände 26, sodass Gegenstände, welche in dem Rollwagen 10 transportiert werden, nicht ohne weiteres aus dem Rollwagen 10 fallen können. Die hier dargestellte rechteckige Konfiguration des Rahmens 12 sowie der Ladefläche 14 ist lediglich exemplarisch, sodass auch andere Konfigurationen möglich sind, beispielsweise eine dreieckige oder ovale Konfiguration.

Ferner geht aus Figur 1 hervor, dass an einer der Griffstange 20 zugewandten Stirnseite des Dachs 22 ein die Griffstange 20 überlappender Abschnitt 28 ausgebildet ist. Der überlappender Abschnitt 28 kann beispielsweise einen Klettverschluss (nicht dargestellt) aufweisen, mittels welchem der überlappende Abschnitt 28 einseitig gelöst werden kann, um die Griffstange 20 in dem überlappenden Abschnitt 28 aufzunehmen und somit zu sichern. Die Verwendung des überlappenden Abschnitt 28 zur Sicherung der Griffstange 20 kann für einen Benutzer des Rollwagens 10 insbesondere dann vorteilhaft sein, wenn der Benutzer den Rollwagen 10 abstellen bzw. parken möchte. Des Weiteren sind die Räder 16 in Figur 1 paarweise an einer Vorderachse bzw. einer Hinterachse (nicht dargestellt) des Rollwagens 10 angeordnet, wobei die beiden Räder 16 der Vorderachse nach innen versetzt sind, während die Räder 16 der Hinterachse jeweils an einem lateralen Ende der Hinterachse angeordnet sind. In dem ersten Ausführungsbeispiel sowie in den weiteren folgenden Ausführungsbeispielen ist die Vorderachse des Rollwagens 10 jeweils exemplarisch an derselben Seite wie der Griff 18 bzw. die Griffstange 20 angeordnet, wodurch eine Vorwärtsbewegung des Rollwagens 10 durch ein Ziehen des Rollwagens 10 mittels des Griffs 18 erzielt werden kann.

In Figur 2 ist nun ein Rollwagen 110 gemäß einem zweiten Ausführungsbeispiel mit einem erhöhten bzw. ausgefahrenen Dach 122 dargestellt. Der Rollwagen 110 des zweiten Ausführungsbeispiels unterscheidet sich von dem Rollwagen 10 des ersten Ausführungsbeispiels einerseits durch die Positionierung des Dachs 122 sowie andererseits durch die Anordnung eines Gestänges 130, welches mit einem Rahmen 112 und einer Griffstange 120 verbunden ist. Ferner umfasst jedes Rad 116 des Rollwagens 110 ein Betätigungselement 132, wobei das Betätigungselement 132 derart mit dem Rad gekoppelt ist, dass sich das Rad 116 entweder in einer Freigabestellung oder in einer Sperrstellung befindet.

Ein Griff 118 ist über die Griffstange 120 schwenkbar an dem Rahmen 112 befestigt, wobei ein erstes Scharnier 134 dazu eingerichtet ist, ein Schwenken der Griffstange 120 um eine Schwenkachse 136 zu ermöglichen, welche orthogonal zu einer Haupterstreckungsrichtung des Rollwagens 110 verläuft. Über das erste Scharnier 134 kann der Griff 118 zwischen einer in Figur 2 dargestellten aufrechten Position und einer im Wesentlichen bodennahen Position verlagert werden. Der Benutzer ist dadurch in der Lage, eine Ausrichtung bzw. eine Höhe des Griffs 118 gemäß seinen Präferenzen zum Ziehen oder Schieben des Rollwagens 110 einzustellen. An einer der Griffstange 120 zugewandten Stirnseite des Rahmens 112 kann ferner ein Halterungselement 138 ausgebildet sein, welches beispielsweise an einem querverlaufenden länglichen Rahmenelement 124 bereitgestellt ist. Solch ein Halterungselement 138, insbesondere eine Klammer oder ein Rastelement, dient hier zur Sicherung der Griffstange 120 in der aufrechten Position des Griffs 118 und erfüllt somit die Funktion des in Bezug auf Figur 1 beschriebenen überlappenden Abschnitts 28.

Aus Figur 2 geht ferner hervor, dass eine Ladefläche 114 an einer Innenseite des Rahmens 112 gehaltert ist und dadurch den Transport von Gegenständen im Inneren des Rollwagens 110 ermöglicht. An den Ecken des Rahmens 112 ist jeweils ein Befestigungselement 140 bereitgestellt, welches dazu eingerichtet ist, ein Befestigen des Dachs 122 an dem Rahmen 112 zu ermöglichen. Dazu umfasst das Befestigungselement 140 einen teleskopierbaren Rohrabschnitt 142, an dessen oberen Ende das Dach 122 befestigt ist. Das Befestigungselement 140 bzw. dessen Rohrabschnitt 142 ist einseitig mit dem Rahmen 112 verbunden, wobei der Rohrabschnitt 142 vorzugsweise vollständig in den Rahmen 112 versenkt werden kann, um beispielsweise die in Figur 1 dargestellte Konfiguration des Dachs 22 zu erzielen.

Die in Figur 2 dargestellten Rohrabschnitte 142 weisen insbesondere einen Durchmesser von mindestens 1 cm auf, um eine hohe Stabilität des jeweiligen Rohrabschnitts 142 bzw. des entsprechenden Befestigungselements 140 zu erzielen. Die Stabilität der Rohrabschnitte 142 wirkt sich positiv auf die Widerstandsfähigkeit des Dachs 122 gegenüber Wind und/oder Erschütterungen aus, welche insbesondere beim Fahren über unebenes Terrain erzeugt werden können. Vorzugsweise betragen die Durchmesser der Rohrabschnitte 142 jedoch nicht über 4 cm, um die Handhabung der Befestigungselemente 140 sowie die Anbringung des Dachs 122 nicht zu erschweren und um das Gewicht des Rollwagens 110 nicht exorbitant zu erhöhen. Ferner sind sowohl die Befestigungselemente 140 inklusive deren jeweiliger Rohrabschnitt 142 als auch der Rahmen 112 und das Gestänge 130 aus einem Metall hergestellt, vorzugsweise aus Aluminium, wodurch eine hohe Stabilität des Rollwagens 110 bei gleichzeitig moderatem Gewicht gewährleistet werden kann.

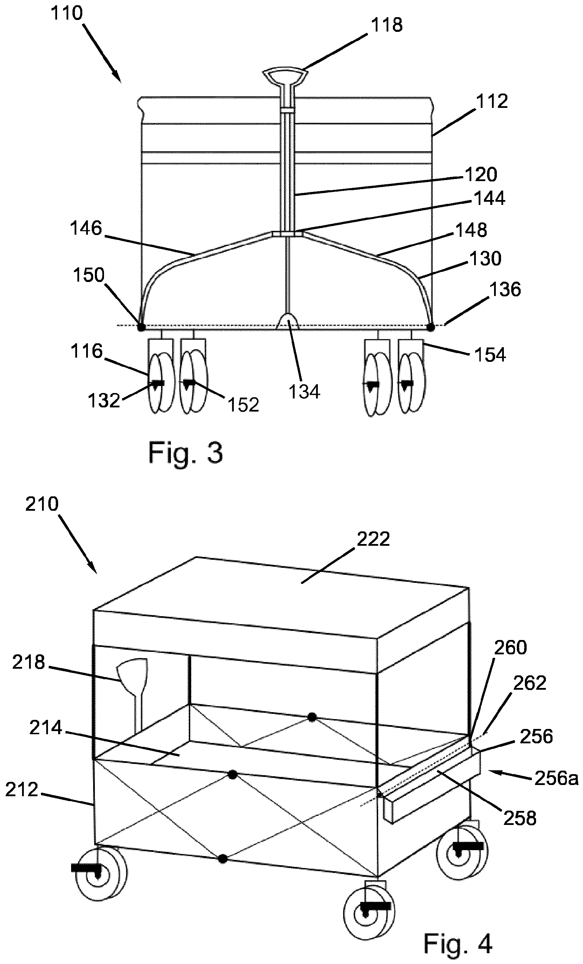

Das in Figur 2 sowie in Figur 3 dargestellte Gestänge 130 ist insbesondere dazu eingerichtet, lateral auf die Griffstange 120 wirkende Kräfte, welche beispielsweise bei einer Kurvenfahrt des Rollwagens erzeugt werden, auf den Rahmen 112 abzuleiten und somit die Griffstange 120 zu entlasten. Dazu ist das Gestänge 130 über ein Verbindungselement 144 mit der Griffstange 120 verbunden, welches beispielsweise auf halber Höhe der Griffstange 120 angeordnet ist. Insofern eine teleskopierbare Griffstange 120 verwendet wird, wie in der Frontalansicht der Figur 3 gezeigt, so ist das Verbindungselement 144 derart ausgebildet, dass die teleskopierbare Griffstange 120 entlang deren Haupterstreckungsrichtung gleitend in dem Verbindungselement 144 gelagert ist und dennoch lateral, d.h. orthogonal zu einer Haupterstreckungsrichtung des Rollwagens 110, durch das Verbindungselement 144 gestützt wird. Von dem Verbindungselement 144 erstrecken sich zwei Abschnitte 146, 148 des Gestänges 130 in Richtung einer Vorderachse des Rollwagens 110 bzw. in Richtung der Schwenkachse 136. Die beiden Abschnitte 146, 148 erstrecken sich hier in im Wesentlichen entgegengesetzten Richtungen von dem Verbindungselement 144 in Richtung der Vorderachse des Rollwagens 110, sodass der erste Abschnitt 146 den Rahmen 112 im Bereich des rechten vorderen Rads 116 kontaktiert und der zweite Abschnitt 148 den Rahmen 112 im Bereich des linken vorderen Rads 116 kontaktiert. Analog zu der Verbindung der Griffstange 120 mit dem Rahmen 112 über ein erstes Scharnier 134 sind auch die beiden Abschnitte 146, 148 über jeweils ein zweites Scharnier 150 mit dem Rahmen 112 verbunden, sodass die Schwenkbarkeit der Griffstange 120 relativ zu dem Rahmen 112 nicht durch das Gestänge 130 beeinträchtigt wird.

Figur 2 veranschaulicht ebenfalls, dass an jedem der Räder 116 des Rollwagens 110 ein Betätigungselement 132 ausgebildet ist, welches hier eine Trittfläche 152 aufweist. Das Betätigungselement 132 ist derart an einem jeweiligen Rad 116 gekoppelt, dass sich das Rad 116 entweder in einer Freigabestellung, in welcher das Rad 116 rotieren kann, sodass der Rollwagen 110 fahren bzw. relativ zu einer Bodenfläche bewegt werden kann, oder in einer Sperrstellung befindet, wobei das Rad 116 beispielsweise gesperrt bzw. blockiert werden kann, um den Rollwagen 110 auch auf geneigtem Untergrund abstellen zu können. Um zwischen der Freigabestellung und der Sperrstellung zu wechseln, kann die Trittfläche 152 als Hebel ausgebildet sein bzw. eine Hebelfunktion aufweisen. Der Benutzer des Rollwagens 110 ist dadurch in der Lage, das Betätigungselement 132 bequem über die Trittfläche 152 zu verlagern, beispielsweise durch Betätigen der Trittfläche 152 mit seinem Fuß oder mit seiner Hand, um die gewünschte Stellung herbeizuführen. Um ein Rad 116 in der Sperrstellung zu sperren bzw. blockieren, kann seitlich an dem Rad 116 beispielsweise ein Zahnkranz (nicht dargestellt) angeordnet sein. In solch einem Fall ist komplementär zu dem Zahnkranz an dem Betätigungselement 132 ein Stift (nicht dargestellt) ausgebildet, welcher im Zuge des Überführens des Betätigungselements 132 von der Freigabestellung in die Sperrstellung in den Zahnkranz eingreift und dadurch die Rotation des Rads 116 blockiert.

Vorzugsweise ist an jedem Rad 116 ein einzelnes Betätigungselement 132 bereitgestellt, wie in den Figuren 2 und 3 gezeigt. Alternativ kann jedoch auch ein Betätigungselement 132 vorgesehen sein, welches mit einer Mehrzahl von Rädern 116 gekoppelt ist. Dazu kann ein entsprechendes Betätigungselement 132 beispielsweise an dem Rahmen 112 angeordnet sein und über ein zusätzliches Gestänge (nicht dargestellt) mit den Rädern 116 gekoppelt sein. Ferner kann hierbei ein Betätigungsmechanismus vorgesehen sein, welcher ein Einstellen einzelner Räder 116 oder ein gemeinsames Einstellen aller Räder 116 ermöglicht. Im Allgemeinen ist es nicht vorgeschrieben, dass ein Betätigungselement 132 direkt an einem Rad 116 befestigt ist. Stattdessen kann das Betätigungselement 132 auch an einer Radaufhängung 154 oder, wie bereits erwähnt, beispielsweise auch an dem Rahmen 112 angeordnet sein.

Des Weiteren ist es vorzugsweise vorgesehen, dass die an der Vorderachse des Rollwagens 110 angebrachten Räder 116 schwenkbar an der Vorderachse ausgebildet sind, wobei die Schwenkbarkeit der Räder 116 insbesondere durch die schwenkbar gelagerte Radaufhängung 154 begründet wird. Diesbezüglich ist hervorzuheben, dass die Räder 116 orthogonal zu der Haupterstreckungsrichtung des Rollwagens 110 schwenkbar sind, sodass der Rollwagen 110 dazu in der Lage ist, Kurven zu fahren, wobei eine Kurvenfahrt beispielsweise durch eine lateral auf den Rahmen 112 und/oder den Griff 118 wirkende Kraft verursacht werden kann. Optional oder zusätzlich können auch die hinteren Räder 116 analog zu den vorderen Rädern 116 schwenkbar gelagert sein. In Figur 3 entsprechen die beiden nach innen versetzten Räder 116 den vorderen Rädern und die beiden nach außen versetzten Räder 116 den hinteren Rädern, wobei diese Konfiguration lediglich exemplarisch ist.

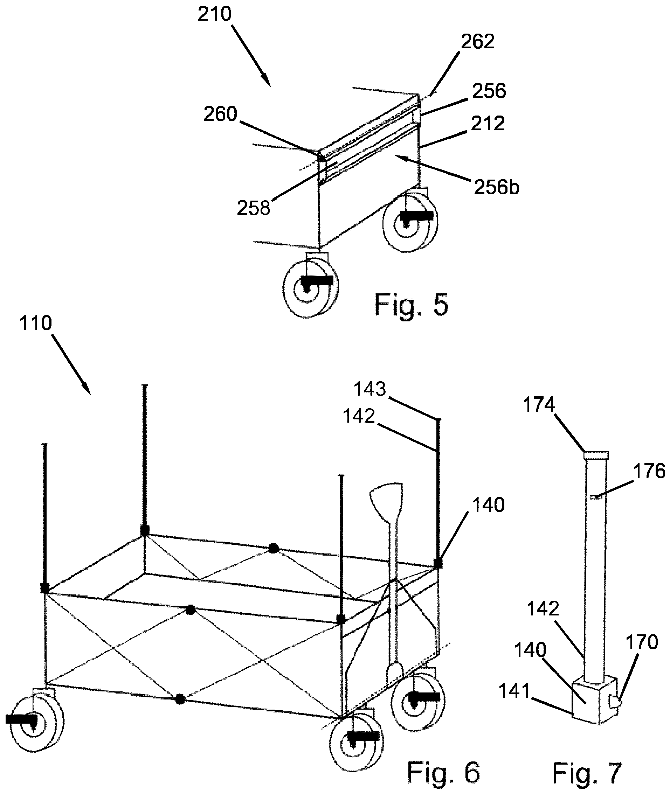

In den Figuren 4 und 5 ist ein Rollwagen 210 gemäß einem dritten Ausführungsbeispiel veranschaulicht. Dabei wird der Rollwagen 210 in Figur 4 in einer perspektivischen Ansicht mit einem erhöhten Dach 222 dargestellt, während in Figur 5 ein Teilausschnitt des Rollwagens 210 gezeigt ist. Der Rollwagen 210 des dritten Ausführungsbeispiels unterscheidet sich von dem Rollwagen 110 des zweiten Ausführungsbeispiels lediglich dadurch, dass an einem Rahmen 212 eine schwenkbare Tasche 256 bereitgestellt ist. Die Tasche 256 ist hier an einer rückseitigen Stirnfläche des Rollwagens 210 sowie an einer Rahmenaußenseite angeordnet, sodass diese Tasche 256 für den Benutzer des Rollwagens 210 von außen leichter zugänglich ist. Alternativ oder zusätzlich kann die Tasche 256 jedoch auch an einer anderen Position an dem Rahmen 212 und insbesondere auch an einer Rahmeninnenseite angeordnet sein, d.h. zu einer Ladefläche 214 hinweisend.

Der Benutzer der Rollwagens 210 kann in der Tasche 256 Gegenstände verstauen bzw. lagern, welche getrennt von den sich auf der Ladefläche 214 befindlichen Objekten transportiert werden sollen. Ferner weist die Tasche 256 einen Aufnahmebereich 258 auf, durch welche Gegenstände in der Tasche 256 abgelegt oder aus der Tasche 256 entnommen werden können. Die Tasche 256 ist vorzugsweise nach oben hin geöffnet, sodass Gegenstände auch im Fall von Erschütterungen nicht ohne weiteres aus der Tasche 256 fallen können. Des Weiteren ist die Tasche 256 über eine Schwenkeinheit 260 an dem Rahmen 212 gelagert, sodass diese um eine Schwenkachse 262 geschwenkt werden kann. Hierbei ist insbesondere eine Betriebsposition 256a der Tasche 256 vorgesehen, welche in Figur 4 dargestellt ist und in welcher der Aufnahmebereich 258 vollständig freigegeben ist, d.h. für den Benutzer zugänglich ist. Wird die Tasche 256 nun durch manuelle Betätigung aus der Betriebsposition 256a verlagert, so kann die Tasche 256 in eine verstaute Position 256b überführt werden, welche in Figur 5 veranschaulicht ist. Auch in der verstauten Position 256b können Gegenstände in der Tasche 256 abgelegt werden, jedoch ist das vorhandene Stauvolumen in der verstauten Position 256b im Vergleich zu der Betriebsposition 256a signifikant reduziert. Dies resultiert aus dem Überführen des Tasche 256 von der Betriebsposition 256a in die verstaute Position 256b, da die Tasche 256 hierbei um etwa 90° um die Schwenkachse 262 geschwenkt wird und folglich näher bzw. enger an dem Rahmen 212 anliegt, wodurch das Stauvolumen der Tasche 256 durch den Rahmen 212 komprimiert wird. Vorzugsweise ist die Tasche 256 aus einem textilen Material hergestellt, welches eine hohe Elastizität aufweist, sodass die Tasche 256 reversibel komprimiert werden kann.

Die Schwenkeinheit 260 der Tasche 256 umfasst einen Schwenkmechanismus, welcher das Überführen der Tasche 256 von der Betriebsposition 256a in die verstaute Position 256b und umgekehrt ermöglicht. In der Betriebsposition 256a ist die Tasche 256 arretiert bzw. verrastet, sodass diese auch während der Fahrt des Rollwagens 210 beständig in der Betriebsposition 256a verbleibt. Möchte der Benutzer die Tasche 256 nun in die verstaute Position 256b überführen, so kann er dies erst nach dem Lösen der Arretierung durchführen. Der Schwenkmechanismus der Schwenkeinheit 260 ist derart ausgebildet, dass die Arretierung durch ein Verlagern der Tasche 256 nach oben gelöst werden kann, d.h. durch ein Schwenken der Tasche 256 um die Schwenkachse 262 in der relativ zu der verstauten Position 256b entgegengesetzten Richtung. Sobald die Arretierung gelöst ist, kann die Tasche 256 abgesenkt werden, um den in Figur 5 dargestellten Zustand zu erreichen und die verstaute Position 256b einzunehmen. Dabei entspannt sich der Schwenkmechanismus, sodass die Tasche 256 beim erneuten Überführen von der verstauten Position 256b in die Betriebsposition 256a arretieren kann. Die Schwenkeinheit 260 ist dazu vorzugsweise in Form eines Drehmoment- oder Rastscharniers bereitgestellt.

Figur 6 zeigt erneut den Rollwagen 119 des zweiten Ausführungsbeispiels, wobei dieser nun ohne Dach 122 dargestellt ist. Hier umfasst ein Befestigungselement 140 ein erstes Ende 141, über welches das Befestigungselement 140 mit dem Rahmen 112 verbunden ist. Ferner ist ein Endabschnitt 174 eines Rohrabschnitts 142 veranschaulicht, wobei der Endabschnitt 174 ein zweites Ende des Befestigungselements 140 definiert. Der Endabschnitt 174 ist vorzugsweise flach ausgebildet, sodass das Dach 122 möglichst einfach über den Endabschnitt 174 gestülpt werden kann. Das Befestigungselement 140 inklusive Rohrabschnitt 142 ist in Figur 7 in einer Detailansicht dargestellt, aus welcher hervorgeht, dass das Befestigungselement 140 an dessen erstem Ende 141, an welchem das Befestigungselement 140 mit dem Rahmen 112 verbunden ist, im Vergleich zu dem Rohrabschnitt 142 einen vergrößerten Durchmesser aufweist. Der Rohrabschnitt 142, welcher hier in einer ausgefahrenen Konfiguration veranschaulicht ist, kann dadurch in das Befestigungselement 140 sowie in dem Rahmen 112 eingefahren werden, insbesondere um die in Figur 1 dargestellte Konfiguration zu erreichen. Dazu sind das Befestigungselement 140 sowie der Rahmen 112 in dem betroffenen Abschnitt hohl ausgebildet.

Um den Rohrabschnitt 142 in verschiedenen Position arretieren zu können, insbesondere um ein Montieren des Dachs 122 auf verschiedenen Höhen bzw. Arretierpositionen zu ermöglichen, umfasst das Befestigungselement 140 eine Arretiereinheit 170. Ferner ist an dem Rohrabschnitt 142 wenigstens ein zu der Arretiereinheit 170 komplementäres Arretierelement 176, welches beispielsweise in Form einer Einkerbung ausgebildet ist. Die Arretiereinheit 170 greift im Inneren des Befestigungselements 140, beispielsweise durch einen Stift, in jeweils ein Arretierelement 176 ein und sichert somit den Rohrabschnitt 142 in der entsprechenden Arretierposition, beispielsweise in der in Figur 7 dargestellten ausgefahrenen Konfiguration. Möchte der Benutzer des Rollwagens 110 nun die Arretierposition des Rohrabschnitts 142 verändern und den Rohrabschnitt 142 relativ zu dem Rahmen 112 verlagern, so kann er dies durch Betätigen der Arretiereinheit 170 und zeitgleiches manuelles Ausziehen oder Einschieben des Rohrabschnitts 142 aus dem bzw. in das Befestigungselement 140 erreichen. Durch das Betätigen der Arretiereinheit 170 wird das Arretierelement 176 des Rohrabschnitts 142 freigegeben und somit die Verlagerung des Rohrabschnitts 142 ermöglicht. So ist es insbesondere bei der Verwendung des Rollwagens 110 ohne Dach 122 vorteilhaft, den Rohrabschnitt 142 in eine Basis-Arretierposition zu überführen, in welcher der Rohrabschnitt 142 fast vollständig in dem Befestigungselement 140 bzw. in dem Rahmen verstaut ist.

Anhand der Figuren 6, 8a, 8b sowie 9a und 9b wird nun erläutert, dass der Rollwagen 110 mit einem reversiblen Faltmechanismus 178, welcher ein platzsparendes Aufbewahren des Rollwagens 110 ermöglicht, und ferner einem Verriegelungsmechanismus 180 ausgestattet ist, welcher ein Verriegeln des Rollwagens 110 in einer gefalteten Konfiguration ermöglicht. Wie aus Figur 6 hervorgeht, in welcher der Rollwagen 110 in der Betriebskonfiguration dargestellt ist, ist der Rahmen 112 mit mehreren Gelenkelementen 147 ausgebildet, welche entlang der Haupterstreckungsrichtung des Rollwagens 110 beidseitig an dem Rahmen 112 bereitgestellt sind. Vorzugsweise verbinden diese Gelenkelemente 147 jeweils zwei längliche Rahmenelemente 124, sodass der Rollwagen 110 symmetrisch zusammenfaltbar bzw. zusammenklappbar ist. Ferner kann zentral an der Ladefläche 114 ein Griff oder eine Schlaufe (nicht dargestellt) ausgebildet sein, mittels welchem/welcher der Benutzer das Zusammenfalten des Rollwagens 110 durchführen kann. Des Weiteren sind aufgrund des Faltmechanismus 178 die Vorderräder 116 versetzt zu den Hinterrädern angeordnet, sodass diese beim Zusammenfalten nicht aneinanderstoßen.

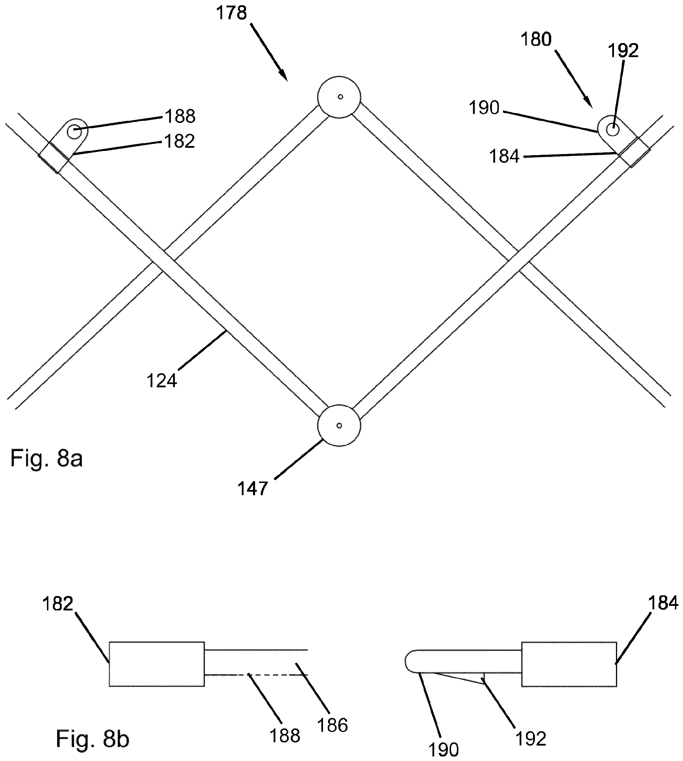

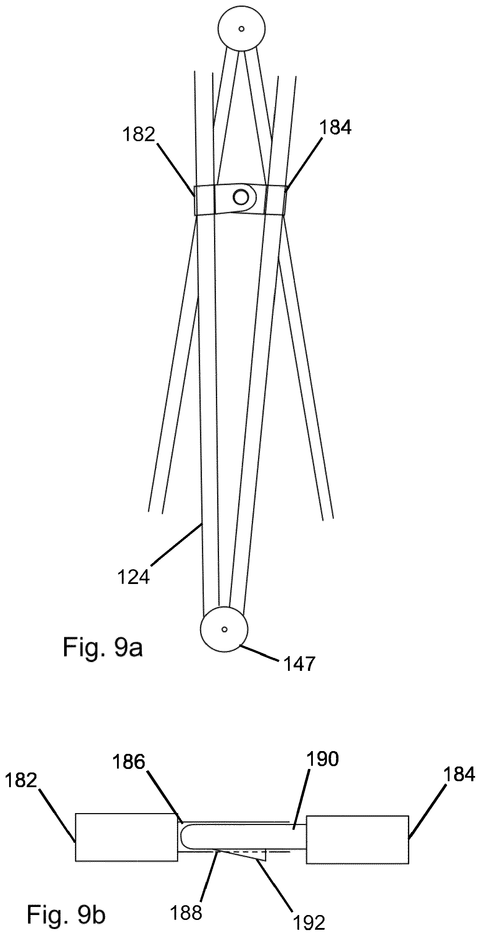

Der Faltmechanismus 178 sowie der Verriegelungsmechanismus 180 werden im Folgenden anhand der Figuren 8a, 8b sowie 9a und 9b näher erläutert. Der Faltmechanismus 178 umfasst die länglichen Rohrelemente 124, welche sich an den Längsseiten des Rahmens des Rollwagens erstrecken, sowie die Gelenkelemente 147. Diese sind jeweils in den Figuren 8a und 9a veranschaulicht. Zwischen den beiden Längsseiten des Rahmens 112 verläuft ein Gestänge (nicht dargestellt), welches den Unterboden des Rahmens darstellt und sich entlang der Haupterstreckungsrichtung des Rollwagens 110 erstreckt. Wird der Faltmechanismus 178 durch den Benutzer betätigt, so klappen bzw. falten sich jeweils benachbarte und über ein Gelenkelement 147 verbundene Rahmenelemente 124 zusammen mit dem Gestänge um eine Faltachse, welche sich orthogonal zu der Haupterstreckungsrichtung des Rollwagens zwischen zwei Gelenkelementen 147 erstreckt, wobei die entsprechenden Gelenkelemente 147 an den beiden Längsseiten ausgebildet sind.

Wird nun der Rollwagen von der in Figur 6 dargestellten und in Figur 8a schematisch angedeuteten Betriebskonfiguration in die gefaltete Konfiguration überführt, welche in Figur 9a schematisch angedeutet ist, so werden zwei Verriegelungselemente 182, 184 einander angenähert und schließlich miteinander verriegelt. Die beiden Verriegelungselemente 182, 184, welche an benachbarten Rahmenelementen 124 ausgebildet sind, definieren somit den Verriegelungsmechanismus 180. Das erste Verriegelungselement 182 umfasst einen Schlitz 186, welcher parallel zu der Bewegungs- bzw. Faltrichtung der Rahmenelemente 124 angeordnet ist, sodass ein Fortsatz 190 des zweiten Verriegelungselements 184 in dem Schlitz aufgenommen werden kann. Das erste Verriegelungselement 182 umfasst ferner eine Aussparung 188, welche orthogonal zu dem Schlitz 186 ausgebildet ist und dazu dient, einen verlagerbaren Abschnitt 192 des zweiten Verriegelungselements 184 aufzunehmen, um das zweite Verriegelungselement 184 in dem ersten Verriegelungselement 182 zu verriegeln.

Die Ausbildung des ersten und zweiten Verriegelungselements 182, 184 ist in der Draufsicht der Figuren 8b und 9b veranschaulicht. Figur 8b stellt dabei einen Zustand dar, welcher der Figur 8a entspricht, d.h. die beiden Verriegelungselemente 182, 184 befinden sich in einem nicht verriegelten Zustand, also insbesondere in der Betriebskonfiguration des Rollwagens 110. Wie bereits erwähnt, treten die beiden Verriegelungselemente 182, 184 miteinander in Eingriff, wenn der Rollwagen 110 von der Betriebskonfiguration in die gefaltete Konfiguration überführt wird. Dabei dringt zuerst der Fortsatz 190 des zweiten Verriegelungselements 184 in den Schlitz 186 des ersten Verriegelungselements 182 ein. Unmittelbar anschließend kontaktiert ein geneigter verlagerbarer Abschnitt 192 des zweiten Verriegelungselements 184 die seitliche Begrenzung des Schlitzes 186, wobei die Neigung des verlagerbaren Abschnitts 192 derart ausgebildet ist, dass ein im Wesentlichen flacher, d.h. zu dem restlichen Fortsatz 190 ebener Teil des verlagerbaren Abschnitts 192 in Richtung des Schlitzes 186 zeigt. Dadurch wird der verlagerbare Abschnitt 192 in dem Schlitz 186 aufgenommen und aufgrund des Kontakts mit der seitlichen Begrenzung des Schlitzes 186 eine Kraft auf die geneigte Fläche des verlagerbaren Abschnitts 192 ausgeübt. Der verlagerbare Abschnitt 192 wird daraufhin in eine Vertiefung (nicht dargestellt) im Inneren des Fortsatzes 190 verlagert und gibt somit den Weg für das zweite Verriegelungselement 184 in den Schlitz 186 frei. Das zweite Verriegelungselement 184 kann in den Schlitz 186 eingeführt werden, bis der verlagerbare Abschnitt 192 vollständig mit der Aussparung 188 überlappt, welche in den Figuren 8b und 9b durch eine gestrichelte Linie in der seitlichen Begrenzung des Schlitzes 186 angedeutet ist.

Im Inneren des Fortsatzes 186 ist ferner ein Rückstellelement, beispielsweise eine Rückstellfeder (nicht dargestellt) ausgebildet, welche den verlagerbaren Abschnitt 192 in die Aussparung 188 drängt. Dadurch verriegelt bzw. arretiert der verlagerbare Abschnitt 192 das zweite Verriegelungselement 184 automatisch, wenn der Rollwagen 110 von der Betriebskonfiguration in die gefaltete Konfiguration überführt wird. Der Benutzer muss den Verriegelungsmechanismus 180 zum Verriegeln des Rollwagens somit nicht aktiv betätigen, wodurch er beide Hände zum Zusammenfalten des Rollwagens zur Verfügung hat. Der Zustand der Verriegelungselemente 182, 184 in der gefalteten Konfiguration ist in den Figuren 9a und 9b veranschaulicht.

Um den Rollwagen 110 von der gefalteten Konfiguration in die Betriebskonfiguration zu überführen, kann der Benutzer die geneigte Fläche des verlagerbaren Abschnitts 192 entgegen der Rückstellkraft des Rückstellelements in Richtung des Inneren des Fortsatzes 190 drücken und zeitgleich das zweite Verriegelungselement 184 aus dem Schlitz 186 des ersten Verriegelungselements 182 ziehen, beispielsweise indem er zwei der Rahmenelemente 124 ergreift und in entgegengesetzte Richtungen zieht.

Abschließend sei darauf hingewiesen, dass insbesondere die Ausbildung der Verriegelungselemente 182, 184 sowie die Anordnung der Rahmenelemente 124 und der Gelenkelemente 147 in den Figuren 8a, 8b, 9a und 9b lediglich exemplarisch dargestellt ist. Dementsprechend sind auch alternative Ausführungen dieser Elemente denkbar.

Ebenfalls sei erwähnt, dass sämtliche in Bezug auf das erste, zweite und dritte Ausführungsbeispiel beschriebenen Merkmale, Effekte und Vorteile auch auf die jeweiligen anderen Ausführungsbeispiele anwendbar und kombinierbar sein können.

Im Folgenden werden weitere Ausführungsbeispiele der vorliegenden Erfindung angeführt, welche spezifische Merkmale des Rollwagens umfassen:
Beispiel 1 ist ein Rollwagen, umfassend: einen Rahmen; eine Ladefläche, welche an dem Rahmen gehaltert ist; wenigstens ein Rad, welches dazu eingerichtet ist, ein Bewegen des Rollwagens relativ zu einer Bodenfläche zu ermöglichen; einen Griff, welcher über eine Griffstange an dem Rahmen befestigt ist; ein Dach, welches dazu eingerichtet ist, an dem Rahmen abnehmbar befestigt zu sein, um die Ladefläche zu bedecken; und wenigstens ein Befestigungselement zum Befestigen des Dachs an dem Rahmen, wobei das Befestigungselement ein erstes Ende, welches dazu eingerichtet ist, an dem Rahmen befestigt zu sein, und ein zweites Ende aufweist, welches dazu eingerichtet ist, an dem Dach befestigt zu sein, wobei das Befestigungselement einen Rohrabschnitt umfasst, welcher relativ zu dem Rahmen verschiebbar ist, wobei ein Durchmesser des Rohrabschnitts größer als 1 cm ist, vorzugsweise größer als 2 cm ist, und besonders bevorzugt zwischen 2 cm und 4 cm liegt.
Beispiel 2 ist ein Rollwagen nach Beispiel 1, wobei das Befestigungselement eine Arretiereinheit umfasst, welche dazu eingerichtet ist, den Rohrabschnitt in einer Arretierposition zu arretieren, wobei der Rohrabschnitt entlang seiner Haupterstreckungsrichtung wenigstens ein zu der Arretiereinheit komplementäres Arretierelement umfasst.
Beispiel 3 ist ein Rollwagen nach einem der vorhergehenden Beispiele, wobei der Rohrabschnitt aus einem Metall hergestellt ist, vorzugsweise aus Aluminium.
Beispiel 4 ist ein Rollwagen, umfassend: einen Rahmen; eine Ladefläche, welche an dem Rahmen gehaltert ist; wenigstens ein Rad, welches dazu eingerichtet ist, ein Bewegen des Rollwagens relativ zu einer Bodenfläche zu ermöglichen; einen Griff, welcher über eine Griffstange an dem Rahmen befestigt ist; ein Dach, welches dazu eingerichtet ist, an dem Rahmen abnehmbar befestigt zu sein, um die Ladefläche zu bedecken; und wenigstens ein Befestigungselement zum Befestigen des Dachs an dem Rahmen, wobei das Befestigungselement ein erstes Ende, welches dazu eingerichtet ist, an dem Rahmen befestigt zu sein, und ein zweites Ende aufweist, welches dazu eingerichtet ist, an dem Dach befestigt zu sein, wobei das Befestigungselement einen Rohrabschnitt umfasst, welcher relativ zu dem Rahmen verschiebbar ist, wobei der Rollwagen ferner wenigstens ein Betätigungselement umfasst, welches eine Freigabestellung und eine Sperrstellung aufweist und derart mit dem Rad gekoppelt ist, dass das Rad in der Freigabestellung um eine Rotationsachse rotierbar ist und dass die Rotation des Rads in der Sperrstellung gesperrt ist.
Beispiel 5 ist ein Rollwagen nach Beispiel 4, wobei das Betätigungselement an einer Radaufhängung, an dem Rad oder an dem Rahmen ausgebildet ist.
Beispiel 6 ist ein Rollwagen nach Beispiel 4 oder 5, wobei das Betätigungselement durch manuelle Betätigung von der Freigabestellung in die Sperrstellung und umgekehrt überführbar ist.
Beispiel 7 ist ein Rollwagen nach einem der Beispiele 4 bis 6, wobei der Rollwagen eine Mehrzahl von Rädern, vorzugsweise vier Räder, und eine Mehrzahl von Betätigungselementen umfasst, wobei jedes Rad mit jeweils einem Betätigungselement gekoppelt ist.
Beispiel 8 ist ein Rollwagen nach Beispiel 7, wobei die Mehrzahl von Betätigungselementen jeweils einzeln oder über einen Betätigungsmechanismus gemeinsam betätigbar ist.

## Patentansprüche

1. Rollwagen (10, 110, 210), umfassend:
- einen Rahmen (12, 112, 212);
- eine Ladefläche (14, 114, 214), welche an dem Rahmen (12, 112, 212) gehaltert ist;
- wenigstens ein Rad (16, 116), welches dazu eingerichtet ist, ein Bewegen des Rollwagens (10, 110, 210) auf einer Bodenfläche zu ermöglichen;
- einen Griff (18, 118, 218), welcher über eine Griffstange (20, 120) an dem Rahmen (12, 112, 212) befestigt ist;
- ein Dach (22, 122, 222), welches dazu eingerichtet ist, an dem Rahmen (12, 112, 212) abnehmbar befestigt zu sein, um die Ladefläche (14, 114, 214) zu bedecken; und
- wenigstens ein Befestigungselement (140) zum Befestigen des Dachs (22, 122, 222) an dem Rahmen (12, 112, 212), wobei das Befestigungselement (140) ein erstes Ende (141), welches dazu eingerichtet ist, an dem Rahmen (12, 112, 212) befestigt zu sein, und ein zweites Ende (174) aufweist, welches dazu eingerichtet ist, an dem Dach (22, 122, 222) befestigt zu sein,
wobei das Befestigungselement (140) einen Rohrabschnitt (142) umfasst, welcher relativ zu dem Rahmen (12, 112, 212) verschiebbar ist,
**dadurch gekennzeichnet, dass** der Rollwagen (10, 110, 210) ferner einen Faltmechanismus (178) aufweist, mittels welchem der Rollwagen (10, 110, 210) von einer Betriebskonfiguration in eine gefaltete Konfiguration, und umgekehrt, überführbar ist,
wobei der Rollwagen (10, 110, 210) ferner einen Verriegelungsmechanismus (180) aufweist, welcher dazu eingerichtet ist, den Rollwagen (10, 110, 210) automatisch in der gefalteten Konfiguration zu verriegeln, wenn der Rollwagen (10, 110, 210) von der Betriebskonfiguration in die gefaltete Konfiguration überführt wird.

2. Rollwagen (10, 110, 210) nach Anspruch 1, wobei der Rahmen (12, 112, 212) eine Mehrzahl von Gelenkelementen (147) aufweist, wobei jeweils ein Gelenkelement (147) zwei erste Rahmenelemente (24, 124) des Rahmens (12, 112, 212) derart miteinander verbindet, dass die Rahmenelemente (24, 124) um eine Faltachse gefaltet werden können, welche orthogonal zu der Haupterstreckungsrichtung des Rollwagens (10, 110, 210) verläuft, und wobei die Gelenkelemente (147) und die Rahmenelemente (24, 124) den Faltmechanismus (178) definieren.

3. Rollwagen (10, 110, 210) nach Anspruch 1 oder 2, wobei der Verriegelungsmechanismus (180) ein erstes Verriegelungselement (182) und ein zweites Verriegelungselement (184) umfasst, wobei die beiden Verriegelungselemente (182, 184) komplementär zueinander ausgebildet sind.

4. Rollwagen (10, 110, 210) nach Anspruch 3, wobei die beiden Verriegelungselemente (182, 184) derart an dem Rahmen (12, 112, 212) angeordnet sind, dass sie beim Überführen des Rollwagens (10, 110, 210) von der Betriebskonfiguration in die gefaltete Konfiguration miteinander in Eingriff treten, um den Rollwagen (10, 110, 210) in der gefalteten Konfiguration zu verriegeln.

5. Rollwagen (10, 110, 210) nach Anspruch 3 oder 4, wobei das erste Verriegelungselement (182) einen Schlitz (186) und eine Aussparung (188) umfasst, wobei die Aussparung (188) orthogonal zu dem Schlitz (186) ausgebildet ist,
wobei das zweite Verriegelungselement (184) einen Fortsatz (190) und einen verlagerbaren Abschnitt (192) umfasst, welcher an dem Fortsatz (190) ausgebildet ist,
und wobei der Fortsatz (190) des zweiten Verriegelungselements (184) dazu eingerichtet ist, beim Überführen des Rollwagens (10, 110, 210) in die gefaltete Konfiguration in den Schlitz (186) des ersten Verriegelungselements (182) einführbar zu sein, sodass der verlagerbare Abschnitt (192) des zweiten Verriegelungselements (184) mit der Aussparung (188) des ersten Verriegelungselements (182) in Eingriff tritt.

6. Rollwagen (10, 110, 210) nach Anspruch 5, wobei der verlagerbare Abschnitt (192) des zweiten Verriegelungselements (184) in Bezug auf den Fortsatz (190) eine Neigung aufweist, sodass der verlagerbare Abschnitt (192) wenigstens abschnittsweise über den Fortsatz (190) hervorsteht.

7. Rollwagen (10, 110, 210) nach Anspruch 5 oder 6, wobei im Inneren des Fortsatzes (190) des zweiten Verriegelungselements (184) ein Rückstellelement ausgebildet ist, welches dazu eingerichtet ist, eine Rückstellkraft auf den verlagerbaren Abschnitt (192) auszuüben, um den verlagerbaren Abschnitt (192) als Reaktion auf eine Betätigung des verlagerbaren Abschnitts (192) in eine Ausgangsposition zurückzuführen.

8. Rollwagen (10, 110, 210) nach einem der Ansprüche 4 bis 7, wobei der Eingriff des ersten und des zweiten Verriegelungselements (182, 184) durch Betätigen des verlagerbaren Abschnitts (192) des zweiten Verriegelungselements (184) lösbar ist, sodass der Rollwagen (10, 110, 210) von der gefalteten Konfiguration in die Betriebskonfiguration überführt werden kann.

9. Rollwagen (10, 110, 210), umfassend:
- einen Rahmen (12, 112, 212);
- eine Ladefläche (14, 114, 214), welche an dem Rahmen (12, 112, 212) gehaltert ist;
- wenigstens ein Rad (16, 116), welches dazu eingerichtet ist, ein Bewegen des Rollwagens (10, 110, 210) auf einer Bodenfläche zu ermöglichen;
- einen Griff (18, 118, 218), welcher über eine Griffstange (20, 120) an dem Rahmen (12, 112, 212) befestigt ist;
- ein Dach (22, 122, 222), welches dazu eingerichtet ist, an dem Rahmen (12, 112, 212) abnehmbar befestigt zu sein, um die Ladefläche (14, 114, 214) zu bedecken; und
- wenigstens ein Befestigungselement (140) zum Befestigen des Dachs (22, 122, 222) an dem Rahmen (12, 112, 212), wobei das Befestigungselement (140) ein erstes Ende (141), welches dazu eingerichtet ist, an dem Rahmen (12, 112, 212) befestigt zu sein, und ein zweites Ende (174) aufweist, welches dazu eingerichtet ist, an dem Dach (22, 122, 222) befestigt zu sein,
wobei das Befestigungselement (140) einen Rohrabschnitt (142) umfasst, welcher relativ zu dem Rahmen (12, 112, 212) verschiebbar ist,
**dadurch gekennzeichnet, dass** an der Griffstange (20, 120) ein Gestänge (130) angeordnet ist, welches schwenkbar an dem Rahmen (12, 112, 212) gelagert ist und dazu eingerichtet ist, eine lateral auf die Griffstange (20, 120) wirkende Kraft auf den Rahmen (12, 112, 212) abzuleiten.

10. Rollwagen (10, 110, 210) nach Anspruch 9, wobei das Gestänge (130) einen ersten Abschnitt (146) und einen zweiten Abschnitt (148) aufweist, wobei sich der erste Abschnitt (146) und der zweite Abschnitt (148) von der Griffstange (20, 120) in entgegengesetzter Richtung zu dem Rahmen (12, 112, 212) erstrecken.

11. Rollwagen (10, 110, 210) nach Anspruch 9 oder 10, wobei das Gestänge (130) einen Durchmesser aufweist, welcher größer als 1 cm ist, vorzugweise größer als 1.5 cm ist, und besonders bevorzugt zwischen 1.5 cm und 3 cm liegt.

12. Rollwagen (10, 110, 210), umfassend:
- einen Rahmen (12, 112, 212);
- eine Ladefläche (14, 114, 214), welche an dem Rahmen (12, 112, 212) gehaltert ist;
- wenigstens ein Rad (16, 116), welches dazu eingerichtet ist, ein Bewegen des Rollwagens (10, 110, 210) auf einer Bodenfläche zu ermöglichen;
- einen Griff (18, 118, 218), welcher über eine Griffstange (20, 120) an dem Rahmen (12, 112, 212) befestigt ist;
- ein Dach (22, 122, 222), welches dazu eingerichtet ist, an dem Rahmen (12, 112, 212) abnehmbar befestigt zu sein, um die Ladefläche (14, 114, 214) zu bedecken; und
- wenigstens ein Befestigungselement (140) zum Befestigen des Dachs (22, 122, 222) an dem Rahmen (12, 112, 212), wobei das Befestigungselement (140) ein erstes Ende (141), welches dazu eingerichtet ist, an dem Rahmen (12, 112, 212) befestigt zu sein, und ein zweites Ende (174) aufweist, welches dazu eingerichtet ist, an dem Dach (22, 122, 222) befestigt zu sein,
wobei das Befestigungselement (140) einen Rohrabschnitt (142) umfasst, welcher relativ zu dem Rahmen (12, 112, 212) verschiebbar ist,
**dadurch gekennzeichnet, dass** an dem Rahmen (12, 112, 212) wenigstens eine Tasche (256) angeordnet ist, welche über wenigstens eine Schwenkeinheit (260) schwenkbar an dem Rahmen (12, 112, 212) gelagert ist und schwenkbar zwischen einer Betriebsposition (256a), in welcher ein Aufnahmebereich (258) der Tasche (256) vollständig freigegeben ist, und einer verstauten Position ist (256b), in welcher der Aufnahmebereich (258) lediglich teilweise freigegeben ist.

13. Rollwagen (10, 110, 210) nach Anspruch 12, wobei die Tasche (256) an einer von der Ladefläche (14, 114, 214) abweisenden Seite des Rahmens (12, 112, 212) angeordnet ist.

14. Rollwagen (10, 110, 210) nach Anspruch 12 oder 13, wobei die Betriebsposition (256a) und die verstaute Position (256b) der Tasche (256) in einem Winkel von etwa 90° zueinander ausgebildet sind.

15. Rollwagen (10, 110, 210) nach einem der Ansprüche 12 bis 14, wobei die Schwenkeinheit (260) einen Schwenkmechanismus umfasst, welcher dazu eingerichtet ist, ein Überführen der Tasche (256) von der Betriebsposition (256a) in die verstaute Position (256b) und umgekehrt durch manuelle Betätigung der Tasche (256) zu ermöglichen.
